# EUROPÄISCHE PATENTSCHRIFT

(11) **EP 0 334 290 B1**
(45) Veröffentlichungstag und Bekanntmachung des Hinweises auf die Patenterteilung: **02.06.1993**
(21) Anmeldenummer: 89105040.3
(22) Anmeldetag: 21.03.1989
(51) Int. Cl.: G07C 1/22, G06F 15/26

(54) **Vorrichtung zum Anzeigen und Kontrollieren von Platzbuchungen**
Device for displaying and controlling reservations
Dispositif d'affichage et de contrôle de réservations

(30) Priorität: 22.03.1988 DE 8803835 U
(43) Veröffentlichungstag der Anmeldung: 27.09.1989
(73) Patentinhaber: Blömacher, Jaques, D-41540 Dormagen (DE); Hewitt International Ltd., London W IX 3TB (GB)
(72) Erfinder: Blömacher, Jacques, D-4047 Dormagen 1 (DE); Masset, Erhard, D-4047 Dormagen 1 (DE)
(74) Vertreter: Türk, Gille, Hrabal, Leifert

(56) Entgegenhaltungen:
- CH-A- 655 664
- DE-A- 3 338 773

## Beschreibung

Die Erfindung betrifft eine Vorrichtung zum Anzeigen und Kontrollieren von Platzbuchungen, beispielsweise von Sportplätzen wie Tennisplätzen, nach dem Oberbegriff des Anspruchs 1 (s. z.B. DE-A-33 38 773 oder CH-A-655 664).

Es ist bekannt, zum Anzeigen der Belegung von Tennisspielplätzen eine paneelartige Tafel zu verwenden, auf der beispielsweise magnetisch haftende Blöckchen oder Steine an die betreffenden Stellen der Tafel aufgesetzt werden können oder Stecksysteme oder Schlüsselsysteme benutzt werden, um die Belegung eines bestimmten Tennisspielplatzes für eine bestimmte Zeitdauer anzuzeigen. Andererseits ist es auch bekannt, Platzbelegungen von Hand auf eine entsprechende Tafel aufzutragen.

Es hat sich jedoch gezeigt, daß derartige Display-Tafeln nicht sicher sind, weil Unbefugte oder auch Spielberechtigte Platzbelegungen ändern können und weil man auch für längere Perioden Plätze im voraus belegen kann, ohne daß zu erkennen ist, für wen die einzelnen Platzbelegungen vorgenommen worden sind. Dies ist gerade für Tennishallen oder solche Sportclubs unerwünscht, bei denen die zum Spielen verfügbaren Plätze nicht langfristig blockiert werden sollen und bei denen es auch unerwünscht ist, daß einzelne Spieler nacheinander für sich Plätze für eine längere Zeitdauer im voraus belegen, die dann für andere Spieler nicht zur Verfügung stehen. Schließlich bieten die bekannten Display-Tafeln mit handschriftlicher oder magnetischer Anzeige, Schlüsselsysteme und Stecksysteme einer Platzbelegung keine Überprüfbarkeit dahingehend, daß die Abrechnung der jeweils belegten und bespielten Plätze auch korrekt erfolgt ist.

Der Erfindung liegt die Aufgabe zugrunde, eine Vorrichtung zum übersichtlichen Anzeigen und Kontrollieren von Platzbuchungen zu schaffen, bei der ein unbefugtes Abändern von Buchungen nicht möglich ist, der Zeitraum von möglichen Vorausbuchungen begrenzt ist und bei der auch nachträglich noch überprüft werden kann, wann ein Platz belegt und bespielt worden war.

Diese Aufgabe wird erfindungsgemäß bei einer Vorrichtung der eingangs genannten Gattung mit den Merkmalen des kennzeichnenden Teiles des Hauptanspruches gelöst. Vorteilhafte Ausgestaltungen der Erfindung sind Gegenstand der Unteransprüche.

Durch die Erfindung wird eine Vorrichtung geschaffen, mit der man die Platzbelegungen auf Sportanlagen, die mehrere Spielfelder oder Spielplätze aufweisen, lückenlos organisieren und überwachen kann. Diese Vorrichtung ist äußerst einfach zu bedienen, so daß sie von den Spielern selbst betätigt und benutzt werden kann und dementsprechend Bedienungspersonal nicht notwendig ist. Diese Vorrichtung kann gleichermaßen für Außenanlagen und Innenanlagen bzw. Hallenanlagen eingesetzt werden. Mit der Vorrichtung kann man verhindern, daß Spielfelder oder Spielplätze unbefugt bzw. ohne Bezahlung und Abrechnung benutzt werden.

Wegen der speziellen lückenlos möglichen Platzbelegung kann man mit der erfindungsgemäßen Vorrichtung eine optimale zeitliche Auslastung aller Spielfelder oder Spielplätze einer mit dieser Vorrichtung ausgestatteten Anlage erzielen, so daß bei entsprechendem Bedarf keine ungenutzten Spielzeiten oder Zwischenzeiten zwischen einzelnen Spielbelegungen entstehen. Alle befugten Spieler können die Anlage bzw. deren Spielfelder gleichberechtigt benutzen, weil einmal vorgenommene Buchungen von anderen Spielern nicht gelöscht werden können, sondern allenfalls von hierzu berechtigtem Personal. Im Gegensatz zu allen herkömmlichen Systemen werden also Manipulationen bei der Platzbelegung verhindert.

Andererseits bietet die erfindungsgemäße Vorrichtung eine genaue Übersicht über die aktuelle Belegsituation der Plätze einer Anlage. Andererseits ist auch eine detaillierte Analyse der täglichen, wöchentlichen, monatlichen oder saisonalen Belegung möglich. Die jeweils einbuchbaren Belegungszeiten können an alle anlagenspezifischen Besonderheiten über die in Verbindung mit der Vorrichtung benutzte Software angepaßt werden, d.h. es läßt sich die Länge der Spielzeiten einstellen, eine Ganztagsbuchung vornehmen u.dgl.

Da die Vorrichtung mittels Kennkarten elektronisch gesteuert wird, ist eine große Betriebssicherheit gewährleistet, da derartige Kennkarten in robuster und dauerhafter Ausführung herstellbar sind.

Schließlich sichert die mittels der erfindungsgemäßen Vorrichtung zu erlangende Information über Daten, daß die Beiträge und Platzgebühren der Spieler erhoben und termingerecht bezahlt werden.

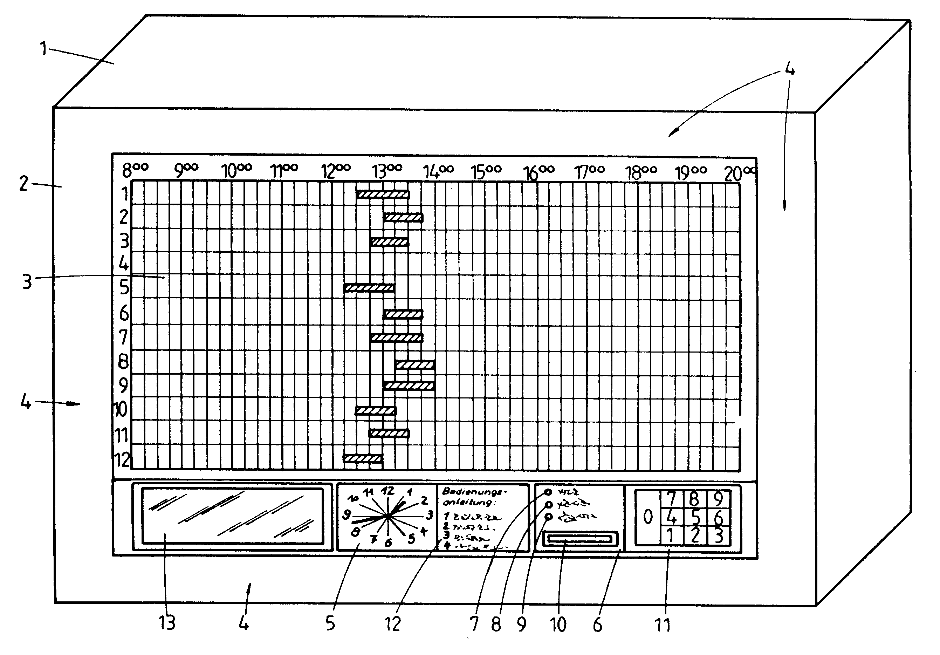

In der Zeichnung ist ein Ausführungsbeispiel einer erfindungsgemäßen Vorrichtung zum Anzeigen und Kontrollieren von Platzbuchungen schaubildlich in einer Ansicht von vorne schematisch dargestellt.

Die Vorrichtung enthält entweder in einem kastenartigen Gehäuse (1) oder extern eine zentrale Rechnereinheit, die hier nicht im einzelnen dargestellt ist, da sie üblicher Ausführung sein kann und in üblicher Weise Daten elektronisch verarbeitet.

In die paneelartig oder bildschirmmäßig ausgebildete Vorderwand (2) des Gehäuses (1) ist entweder ein Bildschirm oder Anzeigenpaneel (3) als integriertes Display eingebaut, die mit der zentralen Rechnereinheit in üblicher Weise verbunden sind. Die umlaufenden Randbereiche (4) der Vorderwand (2) können als Werbeflächen genutzt werden.

Die Vorrichtung ist außerdem mit einer vom Rechner gesteuerten Zeituhr (5) ausgestattet, die dem Benutzer der Vorrichtung einen Zeitvergleich gestattet. Ferner ist ein integrierter Kartenleser (6) mit drei Schaltknöpfen (7, 8 und 9) und einer schlitzartigen Öffnung (10) zum Einstecken von Berechtigungskarten vorgesehen und außerdem ein integriertes Tastenfeld (11) bzw. Keyboard zum Eingeben von Buchungsdaten. Auf einem Feld (12) befindet sich eine Bedienungsanleitung, die auch über den Bildschirm angeboten werden kann. Ferner sind ein separater Bildschirm oder eine andersgeartete Klartextanzeige (13) vorgesehen, der beispielsweise die Namen der die belegten Plätze benutzenden Spieler aufzeigt. Zusätzlich zu der Displaytafel können ein Bildschirm und ein Drucker als weitere Zusatzgeräte benutzt werden, die hier jedoch nicht dargestellt sind. Schließlich können Melderelemente (Passiv-Infrarot-Melder) an die Vorrichtung angeschlossen werden, welche Informationen darüber eingeben, ob ein Platz bespielt wird. Dies ist von Bedeutung, um zu verhindern, daß Plätze ohne Platzbuchung bespielt werden.

Diese Vorrichtung kann an beliebiger Stelle aufgestellt bzw. an einer Wand angebracht werden. Sie läßt sich über das normale Stromnetz betreiben und erfordert daher keine besonderen baulichen Maßnahmen für die Installation.

Das zentrale Steuerelement der Vorrichtung ist ein fest programmierter oder auch programmierbarer Rechner, der die mit dieser Vorrichtung ausgestattete Anlage verwaltet. Die Zeituhr (5) wird vom Rechner gesteuert. Mit in den Schlitz (10) des Kartenlesers (6) nacheinander einsteckbaren Kennkarten, die wie übliche Scheckkarten oder Kreditkarten ausgebildet sein können, belegen die Spieler die Spielzeiten. Dabei sind zwei Vorrangschaltungen möglich, nämlich einmal die Vorrangschaltung in " Spielzeit " und außerdem die Vorrangschaltung in " Platzwahl ". Wird die Vorrangschaltung " Spielzeit " gewählt, erfaßt das System automatisch die nächstmögliche Spielzeit und belegt sie für den Spieler, der seine Kennkarte eingesteckt hat. Bei dieser Vorrangschaltung scheidet eine individuelle Platzwahl aus.

Wird hingegen die Vorrangschaltung " Platzwahl " gewählt, kann der Spieler den gewünschten Platz individuell anwählen. Der Rechner ermittelt für den gewünschten Platz automatisch die nächstmögliche Spielzeit und belegt sie.

Die belegten Spielzeiten werden auf dem Belegungskoordinaten aufweisenden Bildschirm/Displaytafel (3) optisch dargestellt, und zwar nach Platz, Nummer und Zeiträumen. Zugleich erscheinen die Namen der Spieler auf dem weiteren Bildschirm/Klartextanzeige (13). Nach Ablauf der Spielzeit wird die Belegung automatisch gelöscht, so daß am Ende einer Zeiteinheit wie eines Tages kein gesonderter Löschvorgang notwendig ist.

Zum Belegen eines Platzes sind die beiden Kennkarten eines Spielerpaares nötig, im Falle eines Doppelspieles die vier Kennkarten aller Spieler. Zunächst wird die Kennkarte eines der Spieler in den Schlitz (10) des Kartenlesers eingesteckt. In diesem Falle erfaßt die Vorrichtung die nächstmögliche Spielzeit und bietet diese durch Blinkzeichen auf dem Bildschirm/Displaytafel (3) an. Sind die Spieler mit dieser Belegung einverstanden, müssen nacheinander die Kennkarten der weiteren Mitspieler in den Schlitz (10) des Kartenlesers (6) eingesteckt werden. Voraussetzung für eine Doppelspielbelegung ist, daß zuvor ein entsprechender Schaltknopf (8) gedrückt wurde. Nachdem die letzte Kennkarte eingesteckt worden ist, ist die ausgewählte Spielzeit auf dem von der Vorrichtung gewählten Platz fest gebucht. Das Blinkzeichen wechselt in ein ständiges Lichtzeichen über und zeigt an, daß die ausgewählte Spielzeit nunmehr belegt ist.

Wünschen die Spieler hingegen auch einen bestimmten Platz zu belegen, ist es nach Einstecken der ersten Kennkarte erforderlich, einen entsprechenden Druckschalter (7) am Kartenleser (6) zu betätigen. Danach wird über das Tastenfeld (11) die Ziffer des gewünschten Platzes gedrückt und eingegeben. Der Rechner erfaßt automatisch auf dem gewünschten Platz die nächstmögliche Spielzeit und bietet diese durch ein Blinksignal auf dem Bildschirm/Displaytafel (3) an. Sind die Spieler damit zufrieden, werden zur Bestätigung der Buchung nacheinander die Kennkarten der weiteren Mitspieler angesteckt.

Der Rechner ist so programmiert, daß er für Einzelspiele und Doppelspiele unterschiedliche Spielzeiten vorgibt. Die Vorrichtung ist dabei so ausgelegt, daß für einfache Belegung nur die Kennkarten der beiden Spieler benötigt werden. Für Belegung für ein Doppelspiel muß hingegen nach dem Einstecken der ersten Berechtigungskarte oder Kennkarte ein besonderer Druckschalter (8) betätigt werden. Im übrigen ist der Belegungsvorgang wie bei einem Einzelspiel.

Eine Löschung einer Platzbuchung oder Belegung ist nur möglich, wenn man eine hierzu berechtigende Kennkarte benutzt. Jeder Spieler, für den eine Reservierung erfolgte, kann mittels seiner Kennkarte die Buchung löschen, in dem er sie in den Schlitz (10) des Kartenlesers (6) einsteckt und dann den die Löschung bewirkenden Druckschalter (9) betätigt. Dann wird die Buchung oder Belegung automatisch gelöscht.

Zum Aufzeigen von Bedienungsfehlern kann ein spezieller Signalgeber vorgesehen sein, der ein optisches und/oder akustisches Signal abgibt.

Für Sonderbelegungen, beispielsweise zum Zwecke der Platzpflege, für Turnierspiele, für Forderungsspiele, für Trainer u.dgl. können Sonderkennkarten eingesetzt werden, die mit einem speziellen Code gekoppelt sind. Auch in diesem Falle ist die Buchung einer Löschung nur mit einer Kennkarte möglich, die für die Buchung selbst benutzt worden ist.

Um zu verhindern, daß eine Anlage bzw. deren Plätze unbefugt benutzt oder Plätze ohne Bezahlung bespielt werden, kann man insbesondere in Hallenanlagen jedem Spielplatz oder Spielfeld Melder-Elemente zuordnen, die mit der erfindungsgemäßen Vorrichtung bzw. der in dieser untergebrachten zentralen Rechnereinheit verbunden sind. Diese Infrarot-Elemente sind ständig in Funktion und müssen für die Freigabe eines Platzes abgeschaltet werden. Die Freigabe wird über die Rechnereinheit und den Bildschirm/Displaytafel (3) gesteuert. Im Falle einer Festbuchung erhält der Festbucher eine Kennkarte, mit der er vor Spielbeginn seinen gebuchten Platz freigibt. Durch Eingabe dieser Kennkarte in den Kartenleser (6) wird das Melder-Element auf dem betreffenden Platz für die gebuchte Zeit abgeschaltet. Die Freigabe kann zur Kontrolle gespeichert werden.

Im Falle einer freien Buchung, d.h. einer einmaligen Buchung nach Bezahlung der entsprechenden Gebühr, wird der betreffende Platz mit einer Sonderkennkarte freigegeben. Durch Eingabe dieser Sonderkennkarte in den Kartenleser (6) wird das Melder-Element auf dem gebuchten Platz für die gebuchte Zeit abgeschaltet, wobei auch in diesem Falle die Freigabe zur Kontrolle gespeichert werden kann.

Erfolgt eine Spieltätigkeit auf Plätzen, die zuvor nicht freigegeben worden sind oder nach Ablauf der freigegebenen Spielzeit wieder gesperrt wurden, meldet das Melder-Element dies akustisch und/oder optisch an eine Zentrale. Die mißbräuchliche Benutzung des Platzes wird gleichzeitig in der zentralen Rechnereinheit unter Angabe von Datum, Spielzeit und Platznummer gespeichert. Diese Speicherung kann jederzeit über den Bildschirm oder Bildschirm-Zusatzgerät (13) oder einem Drucker abgerufen werden. Dadurch kann eine mißbräuchliche Benutzung von Spielplätzen ausgeschaltet bzw. verhindert werden.

## Patentansprüche

1. Vorrichtung zum Anzeigen und Kontrollieren von Platzbuchungen, beispielsweise von Sportplätzen wie Tennisplätzen, mit einer Display-Tafel, wobei zum Einstellen von Platzbelegungen ein mittels eines Berechtigungselementes auszulösender Schalter (6) vorgesehen ist, **dadurch gekennzeichnet**, daß die Display-Tafel ein mittels eines elektronischen Rechners betriebenes Anzeigenpaneel oder Bildschirm (3) mit Belegungskoordinaten zur optischen Darstellung belegtes Zeiten ist.

2. Vorrichtung nach Anspruch 1, dadurch gekennzeichnet, daß der Schalter (6) eine Öffnung (10) zum Einstecken des Berechtigungselementes wie einer Karte aufweist.

3. Vorrichtung nach Anspruch 2, dadurch gekennzeichnet, daß der Schalter (6) mit einer Tastatur (11) für eine Belegungseingabe und mit einer Löschungseinrichtung (9) verbunden ist.

4. Vorrichtung nach einem der Ansprüche 1 bis 3, dadurch gekennzeichnet, daß sie eine Anzeige (13) für Einzelheiten erfolgter Platzbuchungen aufweist.

5. Vorrichtung nach Anspruch 4, dadurch gekennzeichnet, daß die Anzeige ein separater Bildschirm oder andersgeartete Klartextanzeige (13) ist.

6. Vorrichtung nach einem der Ansprüche 1 bis 5, dadurch gekennzeichnet, daß sie einen als Werbefläche nutzbaren Randbereich (4) an der Vorderseite (2) aufweist.

## Claims

1. Device for displaying and controlling reservations, for instance for playing-grounds such as tennis courts, comprising a display panel provided with a switch (6) operated by means of an admission element for booking ticket reservations
**characterized in that**
said display panel is a displaying device or screen (3) operated by means of an electronic computer and comprising booking coordinates for the optical representation of ticket bookings.

2. Device as defined by claim 1,
**characterized in that**
said switch (6) comprises an aperture (10) for inserting said admission element, such as a card.

3. Device as defined by claim 2,
**characterized in that**
said switch (6) is connected to a key board (11) for inputting ticket reservations, and to a cancellation device (9).

4. Device as defined by either of claims 1 to 3,
**characterized in that**
said device comprises a display device (13) visualizing details of bookings.

5. Device as defined by claim 4,
**characterized in that**
said display device is a separate screen or another type of plain language display device (13).

6. Device as defined by either of claims 1 to 5,
**characterized in that**
at the front face (2) thereof, said device comprises a marginal area (4) which may be used as publicity panel.

## Revendications

1. Dispositif d'affichage et de contrôle de réservations, par exemple pour terrains de sport tels que des courts de tennis, comprenant un panneau de visualisation et comportant un interrupteur (6) déclenchable à l'aide d'un élément d'admission en vue de l'enregistrement de réservations de places,
**caractérisé en ce que**
ledit panneau de visualisation est un panneau ou un écran d'affichage (3) opéré à l'aide d'un ordinateur électronique comportant des coordonnées d'enregistrement pour la visualisation optique des places réservées.

2. Dispositif suivant la revendication 1,
**caractérisé en ce que**
ledit interrupteur (6) comporte une ouverture (10) pour l'enfichage de l'élément d'admission, telle qu'une fiche.

3. Dispositif suivant la revendication 2,
**caractérisé en ce que**
ledit interrupteur (6) est connecté à un clavier (11) pour l'enregistrement de réservations de places ainsi qu'à un dispositif d'annulation (9).

4. Dispositif suivant l'une des revendications 1 à 3,
**caractérisé en ce que**
ledit dispositif comprend un appareil d'affichage (13) visualisant les détails des réservations de places éffectuées.

5. Dispositif suivant la revendication 4,
**caractérisé en ce que**
ledit appareil d'affichage est un écran individuel ou un autre type d'appareil d'affichage de texte en clair (13).

6. Dispositif suivant l'une des revendications 1 à 5,
**caractérisé en ce que,**
sur sa face avant (2), ledit dispositif comporte une zone marginale (4) utilisable comme panneau de publicité.
